(19) Europäisches Patentamt

European Patent Office

Office européen des brevets

(11) EP 1 008 897 A1

(12) EUROPEAN PATENT APPLICATION
published in accordance with Art. 158(3) EPC

(43) Date of publication:
14.06.2000 Bulletin 2000/24

(51) Int. Cl.⁷: **G02F 1/137**

(21) Application number: 99926863.4

(86) International application number:
PCT/JP99/03531

(22) Date of filing: 30.06.1999

(87) International publication number:
WO 00/00865 (06.01.2000 Gazette 2000/01)

(84) Designated Contracting States:
DE FR NL

(30) Priority: 30.06.1998 JP 18313298

(71) Applicant:
Citizen Watch Co., Ltd.
Tokyo 163-0428 (JP)

(72) Inventor:
SUZUKI, Yasushi,
Citizen Watch Co., Ltd. Technical
Tokorozawa-shi, Saitama 359-8511 (JP)

(74) Representative:
Wilhelm & Dauster
Patentanwälte
European Patent Attorneys
Hospitalstrasse 8
70174 Stuttgart (DE)

(54) **ANTIFERROELECTRIC LIQUID CRYSTAL PANEL AND METHOD FOR DETERMINING ANGLE OF DISPLACEMENT OF LAYER**

(57) To achieve an antiferroelectric liquid crystal panel free from a increment of black level caused by temperature changes, the liquid crystal panel is constructed by sandwiching an antiferroelectric liquid crystal between a pair of substrates and a chiral dopant for forming a helical axis substantially parallel to the substrate normal is added to the antiferroelectric liquid crystal. Either a chiral dopant for inducing a right-handed twist around the helical axis or a chiral dopant for inducing a left-handed twist around the helical axis, or both, are added to the antiferroelectric liquid crystal. Further, a Jones vector for output light emerging from a liquid crystal cell is obtained, and the angle of displacement between an upper chevron and a lower chevron is found through calculation.

Fig.3
(a)

**Description**

TECHNICAL FIELD

The present invention relates to a liquid crystal panel used in a liquid crystal display apparatus or the like. More particularly, the invention relates to an antiferroelectric liquid crystal panel using an antiferroelectric liquid crystal and capable of maintaining good display quality irrespective of changes in temperature, and a method of finding the angle of layer displacement.

BACKGROUND ART

A characteristic of antiferroelectric liquid crystal (hereinafter abbreviated AFLC) is that it possesses a large spontaneous polarization Ps. It is also known that in an AFLC panel with the AFLC sandwiched between a pair of substrates, AFLC molecules align themselves in a spatially ordered manner, i.e., in layers, in the absence of an electric field.

AFLC materials, discovered in 1988, were at first introduced as materials that could achieve a mode free from an image sticking phenomenon as compared with modes using conventional nematic liquid crystals; the image sticking phenomenon is the phenomenon in which information written before voltage application remains visible on the liquid crystal panel. Since then, development of panels has been carried out aiming to make use of the properties of these materials. Up to this date, much AFLC research effort has been directed to the development of materials having a large spontaneous polarization and techniques for blending such materials in order to achieve fast response speed, and dramatic improvements have been made in the properties of AFLC, particularly, its response property.

However, as the development of panels having good display characteristics continues, it has been confirmed that the image sticking phenomenon different from the image sticking phenomenon of ferroelectric liquid crystals occurs, presumably because of the layer switching and layer reorientation particular to AFLC materials. It has also been found that this phenomenon becomes more evident when the temperature changes.

For an AFLC cell to be used in a display, a pair of polarizer, of which the polarizing axes are in a crossed Nicol configuration to each other, sandwich the antiferroelectric crystal cell, and the polarization axis of one polarizer is so set as to substantially coincide with the average direction of AFLC molecules in the absence of an electric field. By setting the polarizers in this manner, an AFLC panel can be obtained that produces a black display when no electric field is applied and a white display when a voltage is applied.

However, it has been confirmed that the display characteristic achieved at a particular temperature changes as the temperature changes and cannot be restored to its initial characteristic value even if the initial temperature is restored, that is, the change is irreversible. Since this phenomenon results in the production of black whose blackness is different from that of the initial black, it is called a "increment of black level (= degradation of contrast ratio)" and has been the problem that needs overcoming first of all in order to make operation possible over a wide temperature range.

DISCLOSURE OF THE INVENTION

Overcoming the increment of black level caused by temperature changes, however, poses another big task that must be solved. That is, the fast response and wide viewing angle characteristics, which are charasterics of the AFLC mode, must be maintained while, at the same time, overcoming the increment of black level. Accordingly, it is an object of the invention to provide an AFLC panel that is free from the increment of black level caused by temperature changes and is extremely stable to temperature changes, while, at the same time, maintaining its fast response and wide viewing angle characteristics.

To achieve the above object, in the present invention, a chiral dopant for forming a helical axis substantially parallel to an AFLC substrate normal is added in an AFLC panel constructed by sandwiching AFLC between a pair of substrates.

According to the present invention, a chiral dopant for inducing a right-handed twist around the helical axis or a chiral dopant for inducing a left-handed twist around the helical axis is added to the AFLC.

In a preferred mode, both the chiral dopant for inducing a right-handed twist around the helical axis and the chiral dopant for inducing a left-handed twist around the helical axis are added to the AFLC.

The present invention further provides a method for quantitatively determining the degree of the increment of black level by finding the angle of displacement between an upper chevron layer and a lower chevron layer through calculation using Jones vectors based on the brightness distribution curve of output light emerging from the AFLC cell.

ADVANTAGEOUS EFFECT OF THE INVENTION

The technique disclosed in the present invention, which, as described above, involves adding the chiral dopant for forming a helical axis parallel to the substrate normal in the AFLC panel, provides the following effects. First, the contrast ratio itself, that is achieved at the same temperature, is greatly improved. Second, a self-healing effect is induced for correction of usually formed fine alignment defects. Third, the threshold value described later, i.e., the voltage value at which a light transmittance of 90% is achieved, is lowered, serving to facilitate AFLC driving. In addition to these effects, it has been found that the change of the black display state, which is very sensitive to temperature changes and is an irreversible process, can be effectively suppressed. When this technique is applied to the traditional panel formation process, it becomes possible to stably provide an AFLC panel having good characteristics, while maintaining the features of the AFLC panel, i.e., the fast response, wide viewing angle, and high contrast characteristics.

Furthermore, since the angle of displacement between the upper chevron layer and the lower chevron layer can be obtained by calculation, the effectiveness of the chiral dopant doping can be determined quantitatively, and the appropriate level of the chiral dopant doping can also be determined quantitatively.

BRIEF DESCRIPTION OF THE DRAWINGS

Figure 1 is a diagram showing the arrangement of polarizers when an antiferroelectric liquid crystal is used as a liquid crystal display element.

Figure 2 is a diagram showing how the light transmittance of the antiferroelectric liquid crystal display element varies with an applied voltage.

Figure 3 is a diagram showing a layer structure and liquid crystal molecules within an antiferroelectric liquid crystal panel.

Figure 4 is a side view showing the layer structure within the antiferroelectric liquid crystal panel.

Figure 5 is a diagram showing the arrangement of antiferroelectric liquid crystal cones as viewed from the top of Figure 4.

Figure 6 is a diagram for explaining how the brightness distribution curve of the antiferroelectric liquid crystal panel is obtained.

Figure 7 is a graph showing the brightness distribution curve of an antiferroelectric liquid crystal panel according to a first embodiment of the present invention.

Figure 8 is a graph showing the brightness distribution curve of an antiferroelectric liquid crystal panel according to a second embodiment of the present invention.

Figure 9 is a graph showing the brightness distribution curve of an antiferroelectric liquid crystal panel according to a third embodiment of the present invention.

Figure 10 is a graph showing the brightness distribution curve of an antiferroelectric liquid crystal panel according to a fourth embodiment of the present invention.

Figure 11 is a graph showing the brightness distribution curve of an antiferroelectric liquid crystal panel according to a fifth embodiment of the present invention.

Figure 12 is a graph showing the brightness distribution curve of an antiferroelectric liquid crystal panel according to a sixth embodiment of the present invention.

Figure 13 is a graph showing the brightness distribution curve of an antiferroelectric liquid crystal panel according to a comparative example.

Figure 14 is a table showing the amount of change of standard deviation in the embodiments of the present invention and the comparative example.

Figure 15 is a graph showing the change of the light transmittance over time in the embodiments and the comparative example.

Figure 16 is a graph showing the results of the measurements of a threshold taken by varying the weight ratio of chiral dopants added.

Figure 17 is a graph showing a brightness distribution curve for $\phi = 0°$.

Figure 18 is a graph showing a brightness distribution curve for $\phi = 8°$.

Figure 19 is a graph showing the brightness distribution curve for $\phi = 8°$ after being subjected to a low temperature experience.

Figure 20 is a diagram showing the liquid crystal layer structure and brightness distribution curve before being subjected to a low temperature experience.

Figure 21 is a diagram showing the liquid crystal layer structure and brightness distribution curve after being subjected to a low temperature experience.

EP 1 008 897 A1

DETAILED DESCRIPTION OF THE INVENTION

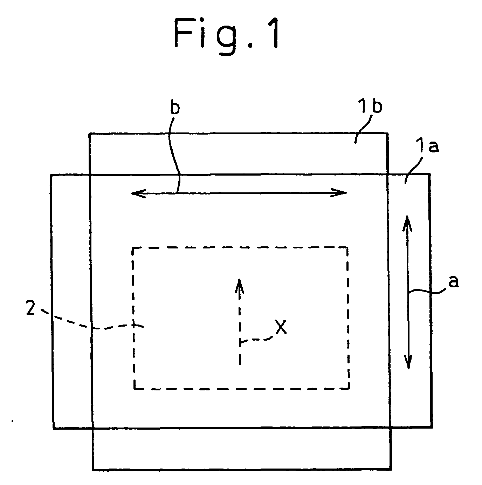

Figure 1 is a diagram showing the arrangement of polarizers when an antiferroelectric liquid crystal is used as a display element. A liquid crystal cell 2 is placed between the polarizers 1a and 1b arranged in a crossed Nicol configuration so that the average long axis direction X of molecules, in the absence of an applied voltage, is oriented substantially parallel to either the polarization axis, a, of the polarizer 1a or the polarization axis, b, of the polarizer 1b. Then, the liquid crystal panel is set up so as to produce a black display when no voltage is applied and a white display when a voltage is applied.

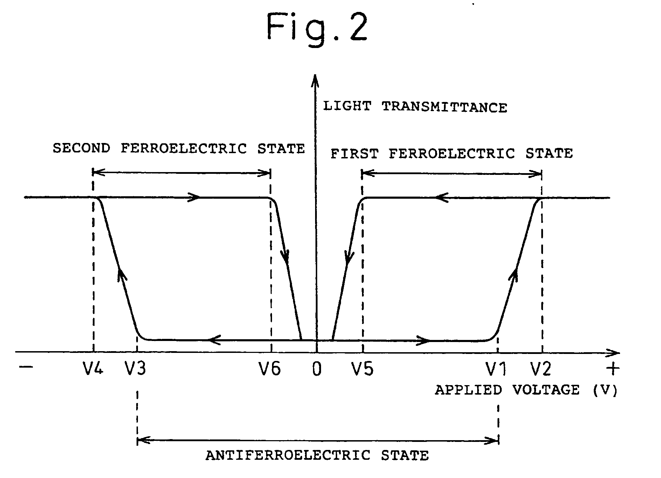

When a voltage is applied across the thus arranged liquid crystal cell, its light transmittance varies with the applied voltage, describing a loop as plotted in the graph of Figure 2. The voltage value at which the light transmittance begins to change when the applied voltage is increased is denoted by V1, and the voltage value at which the light transmittance reaches saturation is denoted by V2, while the voltage value at which the light transmittance begins to drop when the applied voltage is decreased is denoted by V5. Further, when a voltage of opposite polarity is applied, the voltage value at which the light transmittance begins to change when the absolute value of the applied voltage is increased is denoted by V3, and the voltage value at which the light transmittance reaches saturation is denoted by V4, while the voltage value at which the light transmittance begins to change when the absolute value of the applied voltage is decreased is denoted by V6. As shown in Figure 2, a first ferroelectric state is selected when the value of the applied voltage is greater than the threshold of the antiferroelectric liquid crystal molecules. When the voltage of opposite polarity greater than the threshold of the antiferroelectric liquid crystal molecules is applied, a second ferroelectric state is selected. In either of these ferroelectric states, when the voltage value drops below a certain threshold, an antiferroelectric state is selected. The antiferroelectric liquid crystal display can be constructed to produce a black display in the antiferroelectric state or a white display in the antiferroelectric state. The present invention is applicable to both modes of operation. However, the description hereinafter given assumes that the display is set up to produce a black display in the antiferroelectric state.

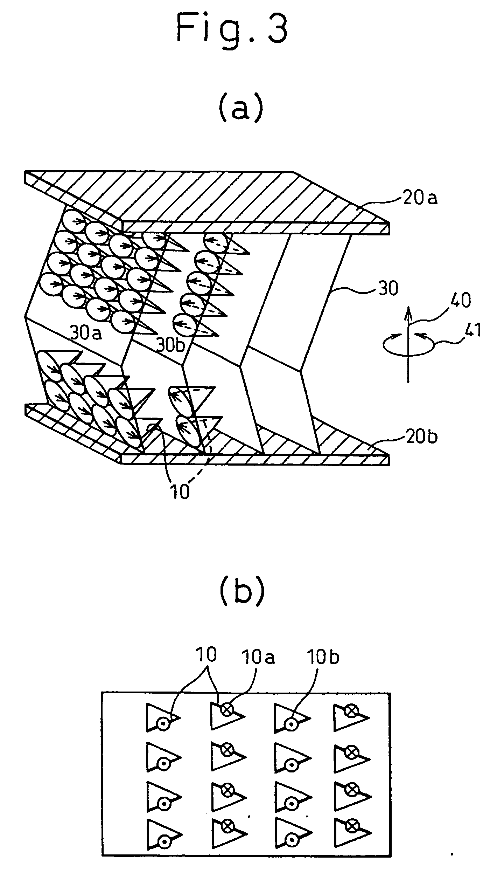

Figure 3 is a diagram schematically showing a layer structure and liquid crystal molecules within the AFLC panel. The following description is given based on this figure.

As shown in Figure 3(a), when a voltage is applied across a pair of substrates (20a and 20b) with AFLC molecules 10 confined therebetween, each AFLC molecule moves in such a manner as to follow along the side surface of a cone. This cone is hereinafter called the liquid crystal cone. The liquid crystal cones are orderly arranged between the substrates, forming the layers (30a and 30b) shown in Figure 3(a). Ferroelectric liquid crystal molecules, which also exhibit spontaneous polarization like AFLC molecules, are also known to form similar layers. However, in the absence of an applied electric field, all the ferroelectric liquid crystal molecules lie in the same position on the side surface of respective liquid crystal cones. On the other hand, as shown by arrows on the respective liquid crystal cones in Figure 3(a), the AFLC molecules are oriented in different directions between adjacent layers in such a manner as to cancel the spontaneous polarization. Though the liquid crystal cones 30a and 30b in only two layers are shown in Figure 3(a), the AFLC molecules in the third and other layers are also oriented in different directions between adjacent layers as in the first and second layers. Figure 3(a) schematically illustrates the AFLC molecules 10 and the directions of spontaneous polarization, 10a and 10b, as viewed from the top of the substrate 20a. As shown, the position of the AFLC molecules and the direction of spontaneous polarization differ between the odd-numbered layers, i.e., the first and third layers, and the even-numbered layers, i.e., the second and fourth layers.

An arrow 40 perpendicular to the substrates 20a and 20b in Figure 3(a) is the substrate normal, and the helical axis induced by the earlier described chiral dopant is formed substantially parallel to the substrate normal. The helical direction of the chiral dopant is, therefore, represented by an arrow 41.

The following method is used to evaluate the black display state of the AFLC panel in a simple and quantitative manner.

A polarization microscope equipped with a CCD camera is used to observe the AFLC panel. Images captured over the entire pixel region of the AFLC panel are classified into levels according to the brightness. The brightness value is plotted along the x axis with the level ranging from a minimum value of 0 to a maximum value of 256. When the total number of pixels at each brightness level on the x axis is plotted along the y axis, a certain distribution is obtained. By analyzing this distribution, the conditions of the layers in the black display state can be evaluated quantitatively.

Generally, the AFLC exhibits a plurality of phases as the temperature changes. Each phase will be described below.

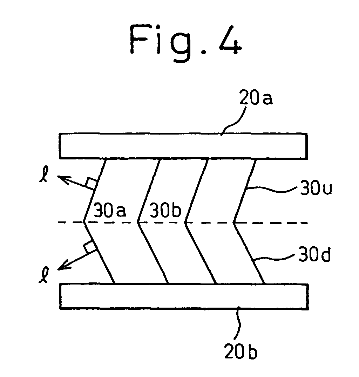

Figure 4 is a side view showing the structure of the liquid crystal layers within the AFLC panel. When a voltage is applied across the liquid crystal sandwiched between the pair of substrates (20a and 20b), the liquid crystal cones align themselves in an ordered manner between the substrates, forming the layers 30a, 30b, etc., as earlier described. The layers take the chevron structure with each layer slightly bent at the center. In this figure, the upper part is called the "upper chevron" and the lower part the "lower chevron". Arrow 1 perpendicular to the liquid crystal layer plane is the layer normal.

4

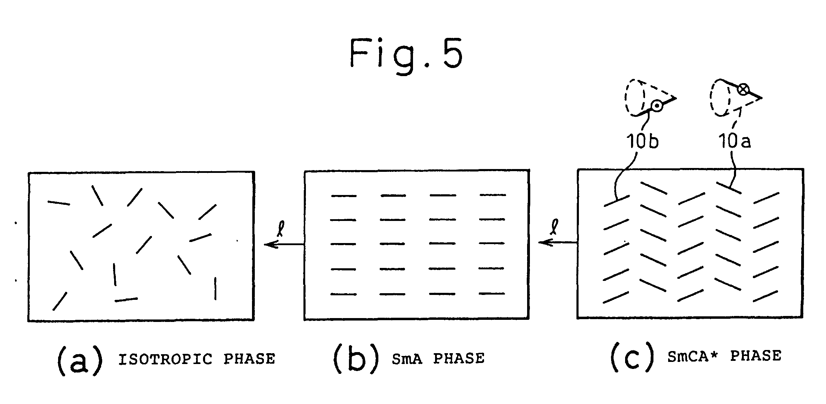

Figure 5 is a diagram showing the arrangement of the liquid crystal cones as viewed from the top of Figure 4. To describe in terms of the cooling process, part (a) shows the isotropic phase in which neither a degree of order in molecular centers of gravity nor a degree of order in molecular long axes direction have in the highest temperature region. As the temperature lowers, a transition is made to the SmA phase shown in part (b) in which a certain degree of ordering is attained for both the centers of gravity and the molecular long axes direction. When the temperature further lowers, a transition is made to the SmC* phase or SmCA* phase shown in part (c) in which the molecular long axis directions are tilted with respect to the layer normal, while retaining the layer structure. And the final state is a crystal.

In the embodiments of the present invention, AFLC panels were made as described below. An AFLC panel obtained by injecting an antiferroelectric liquid crystal exhibiting the isotropic phase was cooled at a rate of 1°C/minute to 30°C, the temperature at which the AFLC changes state to the SmCA* phase. Next, the AFLC panel was subjected to voltage treatment for about one minute using a rectangular wave of 30 Hz and 50 V, and this AFLC panel was taken as an initial state sample. Thereafter, the AFLC panel was cooled in a refrigerator to 10°C and held in this state for one night. After that, the AFLC panel was heated back to the temperature of 30°C at a rate of about 10°C/minute, and this AFLC panel was taken as a low temperature experienced sample.

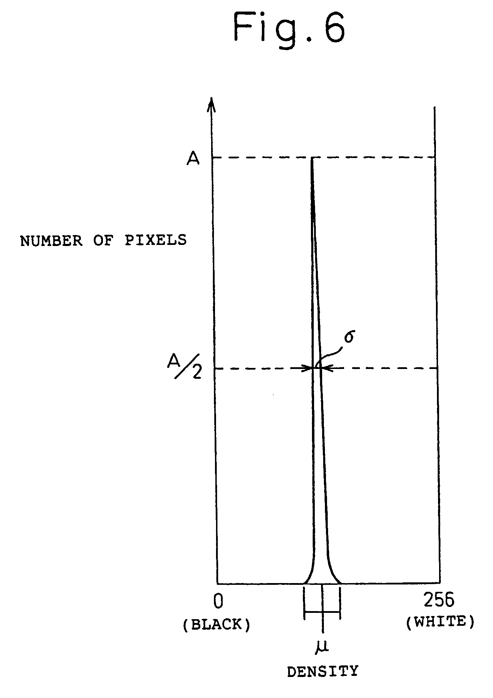

The inventor prepared a plurality of such AFLC panels using an antiferroelectric liquid crystal doped with a chiral dopant, while varying the kind and concentration of the chiral dopant added. Then, for the initial state sample and low temperature experienced sample of each AFLC panel, brightness distributions over the entire pixel region of the AFLC panel were analyzed using the polarization microscope equipped with a CCD camera, as earlier described. Referring to Figure 6, an explanation will be given of how the brightness distribution of the AFLC panel was obtained. In the graph of Figure 6, the brightness is plotted in 256 steps (hereinafter described as "density) along the abscissa. On the abscissa, density 0 means black and density 256 white. The brightness increases as the density value increases. The ordinate represents the number of pixels having the density plotted as abscissa.

The number of pixels in the liquid crystal panel used in each embodiment of the invention is 304,964, and the brightness distribution curve shown in Figure 6 is obtained by plotting the number of pixels against each density value on the abscissa. As shown in Figure 6, the curve is substantially symmetrical about the center line, the number of pixels being the largest at the mean value $\mu$ of the density distribution. Denoting the largest number of pixels by "A", standard deviation $\sigma$ is obtained that represents the width of the density distribution at a level where the number of pixel is "A/2". In the AFLC panel, the smaller the standard deviation $\sigma$, the smaller the brightness variation and the less prone to the "increment of black level".

The inventor obtained brightness distribution curves for the "initial state sample" and the "low temperature experienced sample" in each embodiment, and carried out the above analysis. The results will be described below.

(Embodiment 1)

Two percent by weight of CM34 as a chiral dopant for inducing a right-handed twist around the helical axis (hereinafter described as the "right-handed chiral dopant") was added to MX59-1H (manufactured by Mitsubishi Gas Chemical) used as the AFLC material.

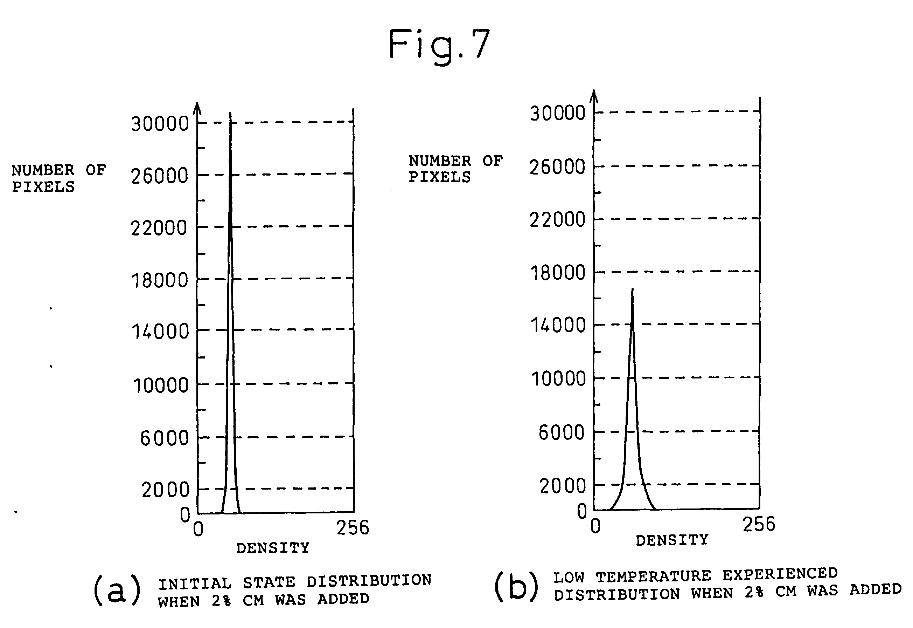

Figure 7 shows brightness distribution curves, one (Figure 7(a)) for the initial state sample (hereinafter called the "initial state distribution") and the other (Figure 7(b)) for the low temperature experienced sample (hereinafter called the "low temperature experienced distribution"), for the AFLC panel of this embodiment. In this example, the standard deviation of the initial state distribution was 5.5 and that of the low temperature experienced distribution was 11.3.

(Embodiment 2)

Four percent by weight of CM 34 as the right-handed chiral dopant was added to the same AFLC material as used in the first embodiment.

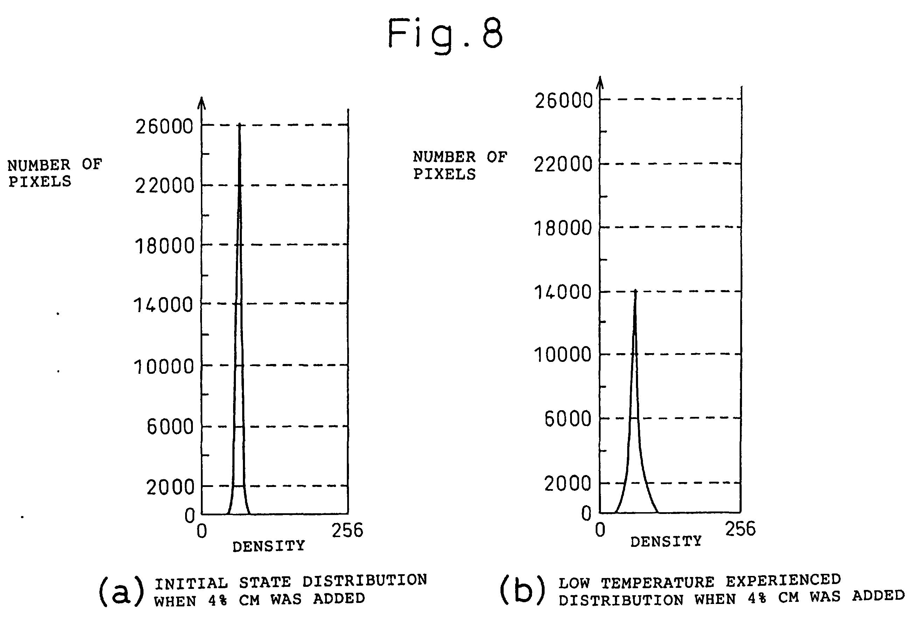

Figure 8 shows brightness distribution curves, one for the initial state distribution (Figure 8(a)) and the other for the low temperature experienced distribution (Figure 8(b)), for the AFLC panel of this embodiment. In this example, the standard deviation of the initial state distribution was 7.0 and that of the low temperature experienced distribution was 13.7.

(Embodiment 3)

Two percent by weight of cholesteryl nonanoate (CN) as a chiral dopant for inducing a left-handed twist around the helical axis (hereinafter described as the "left-handed chiral dopant") was added to the same AFLC material as used in the first embodiment.

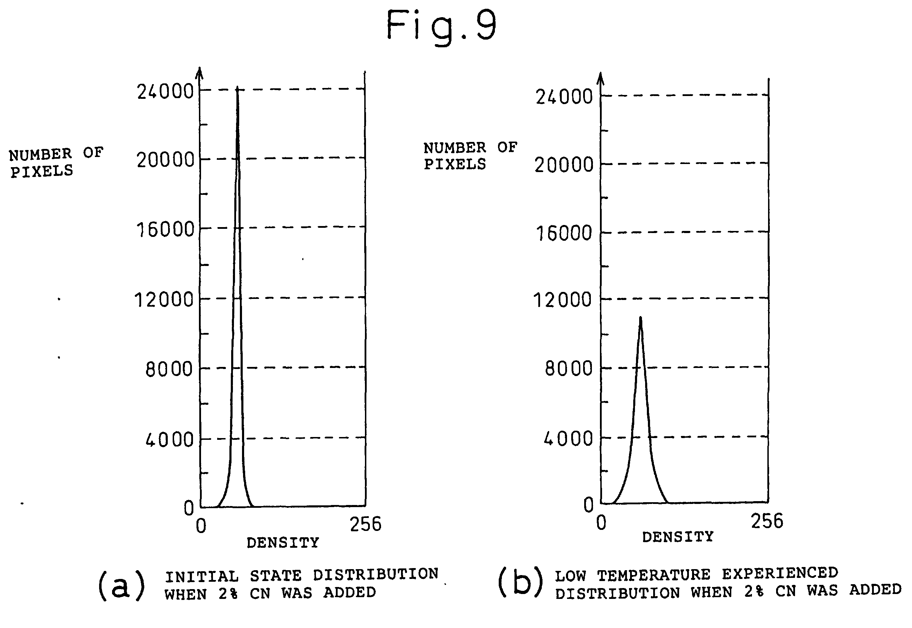

Figure 9 shows brightness distribution curves, one for the initial state distribution (Figure 9(a)) and the other for the low temperature experienced distribution (Figure 9(b)), for the AFLC panel of this embodiment. In this example, the standard deviation of the initial state distribution was 7.8 and that of the low temperature experienced distribution was 14.6.

(Embodiment 4)

Four percent by weight of CN as the left-handed chiral dopant was added to the same AFLC material as used in the first embodiment.

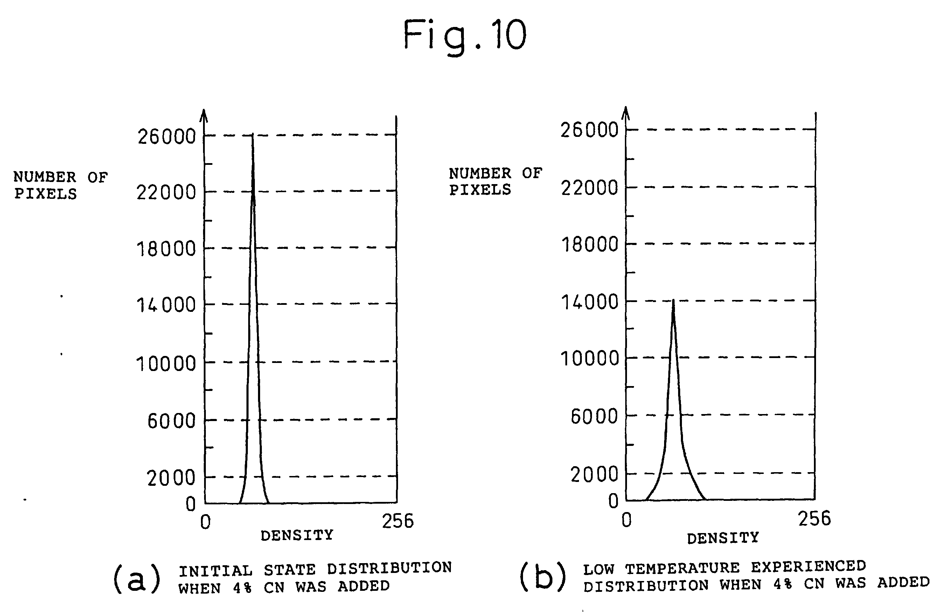

Figure 10 shows brightness distribution curves, one for the initial state distribution (Figure 10(a)) and the other for the low temperature experienced distribution (Figure 10(b)), for the AFLC panel of this embodiment. In this example, the standard deviation of the initial state distribution was 7.3 and that of the low temperature experienced distribution was 13.7.

(Embodiment 5)

One percent by weight of CM34 as the right-handed chiral dopant and one percent by weight of CN as the left-handed chiral dopant were added to the same AFLC material as used in the first embodiment.

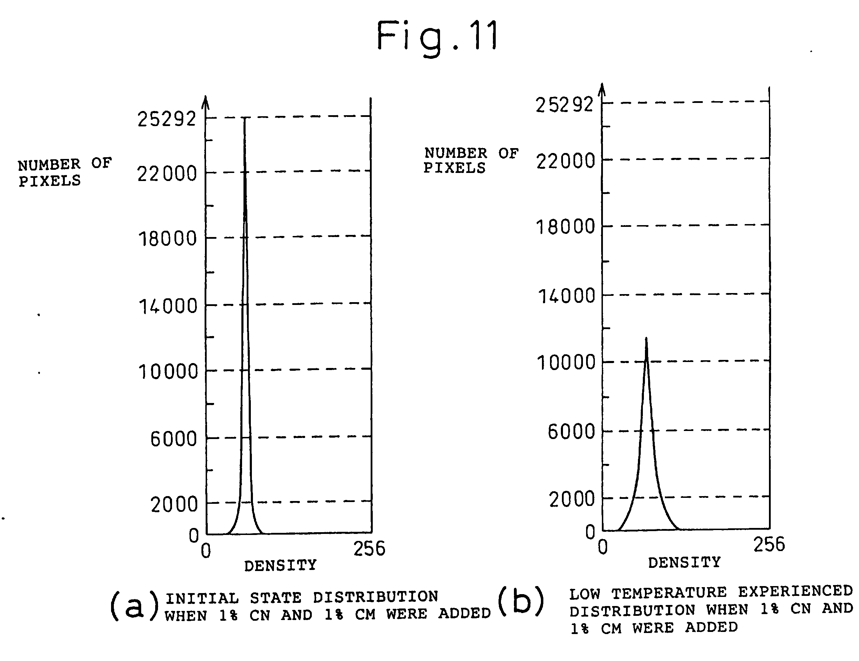

Figure 11 shows brightness distribution curves, one for the initial state distribution (Figure 11(a)) and the other for the low temperature experienced distribution (Figure 11(b)), for the AFLC panel of this embodiment. In this example, the standard deviation of the initial state distribution was 7.8 and that of the temperature experienced distribution was 16.5.

(Embodiment 6)

Two percent by weight of CM34 as the right-handed chiral dopant and two percent by weight of CN as the left-handed chiral dopant were added to the same AFLC material as used in the first embodiment.

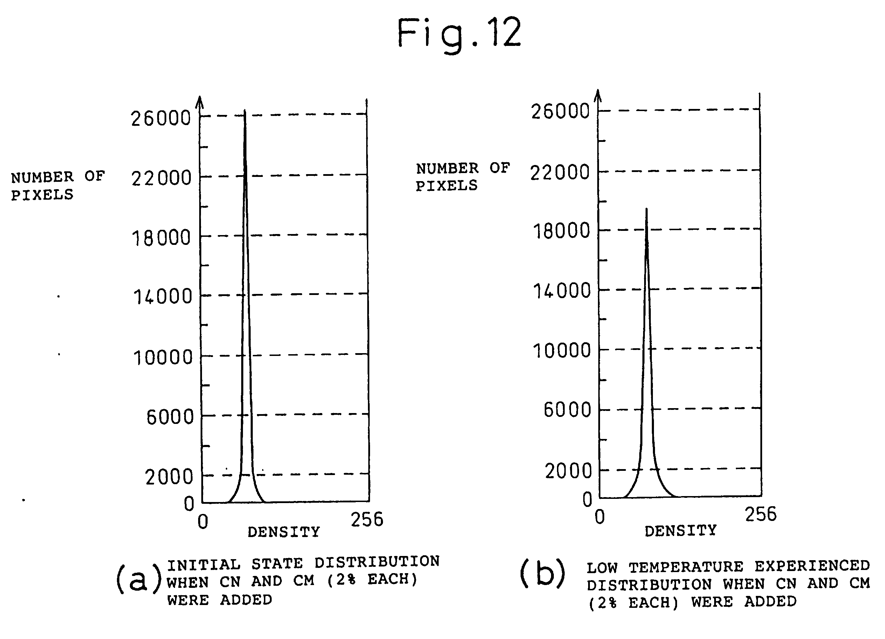

Figure 12 shows brightness distribution curves, one for the initial state distribution (Figure 12(a)) and the other for the low temperature experienced distribution (Figure 12(b)), for the AFLC panel of this embodiment. In this example, the standard deviation of the initial state distribution was 9.5 and that of the low temperature experienced distribution was 13.6.

(Comparative example)

As a comparative example, the same AFLC material as used in the first embodiment was used without adding any chiral dopants.

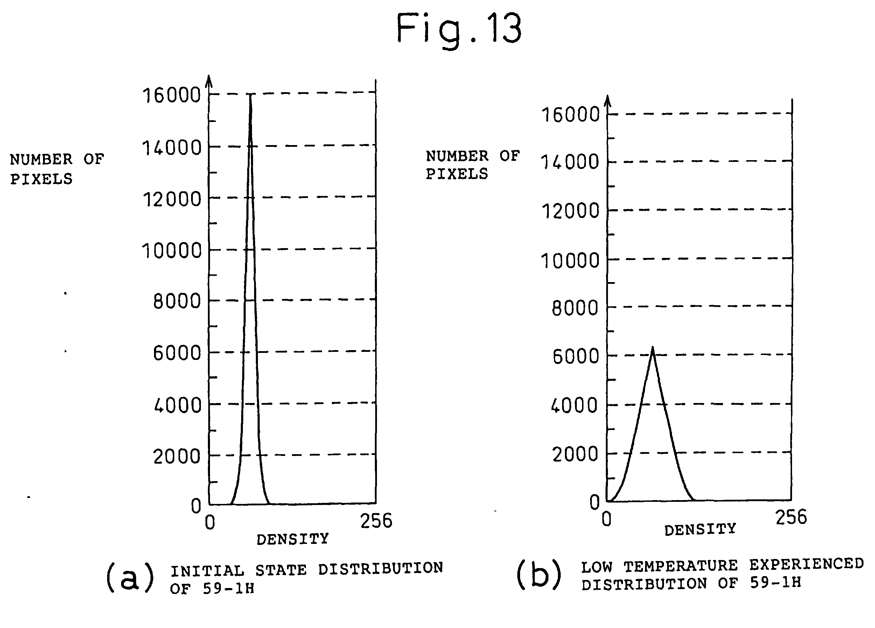

Figure 13 shows brightness distribution curves, one for the initial state distribution (Figure 13(a)) and the other for the low temperature experienced distribution (Figure 13(b)), for the AFLC panel of this example. In this example, the standard deviation of the initial state distribution was 8.8 and that of the low temperature experienced distribution was 21.4.

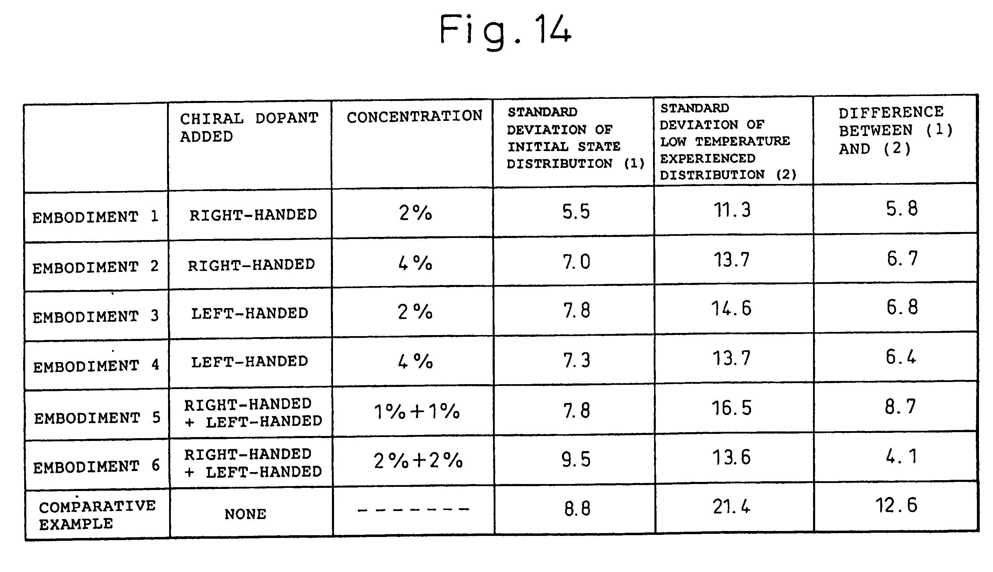

Figure 14 is a table showing the amount of change of the standard deviation in the above embodiments and the comparative example.
The table tabulates the difference between the standard deviation of the initial state distribution (1) and that of the low temperature experienced distribution (2). The smaller the difference between (1) and (2), the less the difference in the black display state depending on the temperature. As can be seen from the results shown in the table, the difference between the standard deviation of the initial state distribution (1) and that of the low temperature experienced distribution (2) was smaller and the temperature dependence of the black display state was reduced in the above embodiments where a chiral dopant or dopants were added, compared with the comparative example where no chiral dopants were added. Specifically, in the sixth embodiment where 2% right-handed chiral dopant and 2% left-handed chiral dopant were added, better results were obtained. As earlier described, the smaller the standard deviation σ, the smaller the brightness variation and the less prone to the "increment of black level".

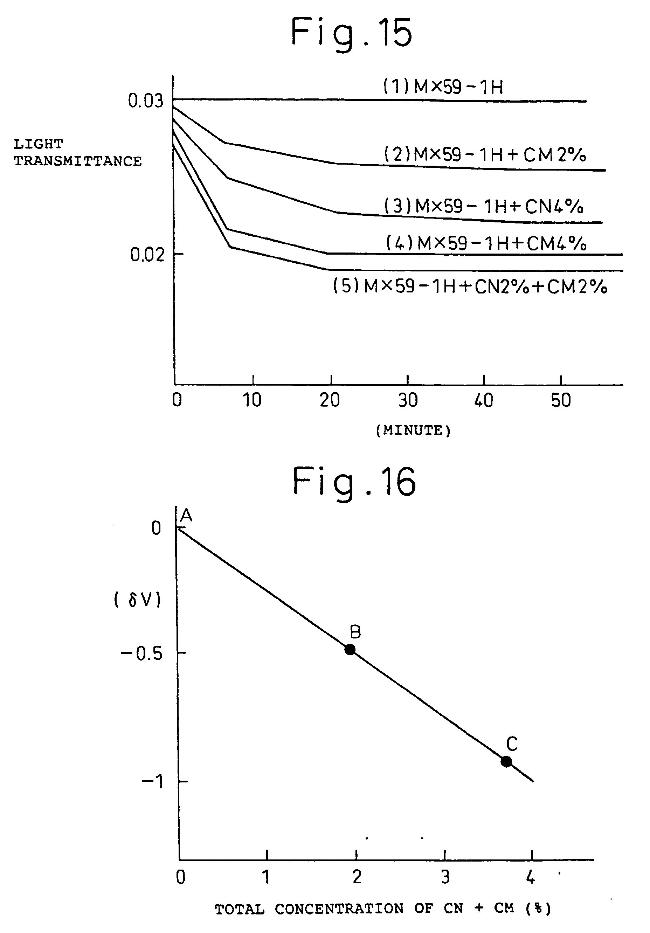

Figure 15 is a graph showing the change of the light transmittance over time for the low temperature experienced samples of the first, second, fourth, and sixth embodiments for comparison with that of the comparative example when the respective samples were left at 30°C. (1) shows the comparative example, (2) the first embodiment, (3) the fourth embodiment, (4) the second embodiment, and (5) the sixth embodiment. The graph shows the results of the measurements of the light transmittance in the black display state of each sample, and indicates that the lower the value of the light transmittance, the more suppressed the increment of black level and the better the black display state. In the case of the comparative example (1) using only MX59-1H, the light transmittance of the low temperature experienced sample did not change throughout the period. On the other hand, in the case of the embodiments (2) to (4) where the right-handed chiral dopant and/or the left-handed chiral dopant were added, the light transmittance dropped with time. This means that the variation was reduced and the transmittance was restored to the level close to that of the initial state. It has thus been found from the graph that by adding a chiral dopant, a better black display state is obtained and the, contrast ratio is improved. When this process was observed under the polarization microscope, it was confirmed that the structure of the panel doped with the chiral dopant changed from a structure containing many defects to a structure containing fewer defects. Thus it was deduced that in the case of the AFLC panel doped with the chiral dopant, the layer structure underwent a self-restoration process, regardless of whether the AFLC panel was a low temperature experienced panel with defects introduced in its layer structure or a panel not subjected to low temperature experience. This tendency becomes more pronounced as the amount of the chiral dopant added is increased.

However, if the amount of the chiral dopant added exceeds 10%, the liquid crystal in the AFLC panel will exhibit a different phase because of the resulting structural change, and the temperature ranges of the SmCA* phase, SmA phase, and isotropic phase will change greatly. For example, the temperature range where the AFLC exhibits the SmCA* phase or SmA phase will become narrower. Compatibility with the desirable operating temperature range of the AFLC panel will then be lost. Accordingly, the amount of the chiral dopant added should be held within 10%, and more preferably within 5%.

Figure 16 shows the results of the measurements of a threshold taken by varying the weight ratio of the right-handed chiral dopant (CM) and the left-handed chiral dopant (CN) respectively added to the AFLC material MX59-1H. The threshold here refers to the voltage at which the light transmittance is 90% of the light transmittance attained when a sufficient voltage is applied.

In Figure 16, the abscissa represents the percentage of the chiral dopant added to the antiferroelectric liquid crystal, and the ordinate the threshold, where $\delta V$ is the difference between the threshold when the chiral dopant of a particular concentration is added and the threshold when no chiral dopants are added. Compared with the threshold 0, which is the value when no chiral dopants are added (A), the threshold when about 2% chiral dopant is added (B) is about -0.5%, while the threshold when about 3.7% chiral dopant is added (C) is about -0.8%. In the figure, the negative sign of $\delta V$ means that the threshold becomes lower than that when only MX59-1H is used, that is, the voltage necessary for driving is reduced, which is quite advantageous for driving. Though specific cases where only CN or CM is added are not shown here, it has been confirmed that when CN or CM is added, the threshold becomes lower than that when only the MX59-1H is used.

Next, a description will be given of the method for quantitatively determining the degree of the "increment of black level" through calculation by analyzing the brightness distribution curve obtained in Figure 6.

"Fundamentals of Liquid Crystals and Display Applications," written by Katsumi Yoshino and Masanori Ozaki and published by Corona Publishing Co., gives a description of the Jones process, and Section "3.7.4 Representation by Jones Vectors of the Propagation of Light Through a Uniform Medium," lines 1 to 4 on page 88, states "When considering the polarization state of light transmitted through an optical system constructed from a combination of a polarizer and an anisotropic medium, the incident light is represented by a Jones vector, and the optical elements are represented by a Jones matrix. Then, by multiplying them, the Jones vector for the output light is found, and the polarization state is thus obtained."

To described the contents of the above description in the form of an equation, the Jones vector Vout for the output light is related to the Jones matrix W and the Jones vector Vin for the incident light by

$$\text{Vout} = W \cdot \text{Vin} \tag{1}$$

Here, the Jones matrix W can be written as

$$
\begin{aligned}
W &= R(-\phi)W(\Gamma)R(\phi) \\
&= \begin{bmatrix} \cos\phi & -\sin\phi \\ \sin\phi & \cos\phi \end{bmatrix} \begin{bmatrix} e^{-i\Gamma/2} & 0 \\ 0 & e^{i\Gamma/2} \end{bmatrix} \begin{bmatrix} \cos\phi & \sin\phi \\ -\sin\phi & \cos\phi \end{bmatrix} \\
&= \begin{bmatrix} \cos\Gamma/2 - i\cos2\phi\sin\Gamma/2 & -i\sin2\phi\sin\Gamma/2 \\ -i\sin2\phi\sin\Gamma/2 & \cos\Gamma/2 + i\cos2\phi\sin\Gamma/2 \end{bmatrix} \quad \cdots \tag{2}
\end{aligned}
$$

where $R(-\phi)$ and $R(\phi)$ are rotation matrices, $W(\Gamma)$ is the Jones matrix of the medium of phase difference $\Gamma$, and $\phi$ is the angle that the optical axis makes with the y axis. The y axis is an axis lying in the xy plane perpendicular to the direction of propagation of the light, and the phase difference $\Gamma$ is expressed by

$$\Gamma = 2\pi\Delta nd/\lambda \qquad (3)$$

where $\Delta nd$ is retardation, a value unique to the medium, and $\lambda$ is the wavelength of the incident light.

When a liquid crystal cell is used as the optical system described above, the characteristics of the incident light and output light entering and leaving the liquid crystal cell can be found using the Jones vectors. For example, the liquid crystal cell containing the liquid crystal as the medium is sliced into flat pieces each thin enough that its optical properties can be regarded as uniform. Each of the thin slices of the liquid crystal cell can be thought of as a liquid crystal thin plate. When light is incident on this liquid crystal thin plate, the Jones vector of the output light is found from the Jones vector of the incident light. That is, since the liquid crystal cell is made up of a stack of such liquid crystal thin plates, the optical properties of the entire liquid crystal cell can be found by sequentially obtaining the relationship between the incident light and output light for the respective thin plates.

A method of analyzing optical properties when cholesteric liquid crystal is used as the liquid crystal is described in "Liquid Crystals," Chandrasekhar, Cambridge University Press, 1977 (p.187-). The present invention provides a method of quantitatively determining the degree of the "increment of black level" by applying this optical property analysis method to antiferroelectric liquid crystal cells, and by obtaining the angle of displacement, $\theta$, between the upper chevron layer and the lower chevron layer, hereinafter described, from the brightness distribution curve shown in Figure 6.

The layer structure of the AFLC is different from that of the cholesteric liquid crystal. This must be taken into account when applying the above analysis method to the AFLC. That is, since the layers in the AFLC are bent at the midpoint between the substrates, it is necessary to obtain a Jones vector for each of the upper half and lower half layer structures, i.e., the upper chevron layer (up) and the lower chevron layer (down). Then, the Jones matrix must be written by taking both Jones vectors into account.

In the present invention, as the means of quantitatively evaluating the characteristics of the output light, the AFLC cell was observed using the earlier mentioned polarization microscope equipped with a CCD camera, to obtain the brightness distribution curve. The degree of the "increment of black level" can be determined quantitatively by obtaining the mean value $\mu$ and standard deviation $\sigma$ of the density distribution from the brightness distribution, calculating the Jones vector for the output light based on them, and finding the angle of displacement between the upper and lower chevron layers in the AFLC.

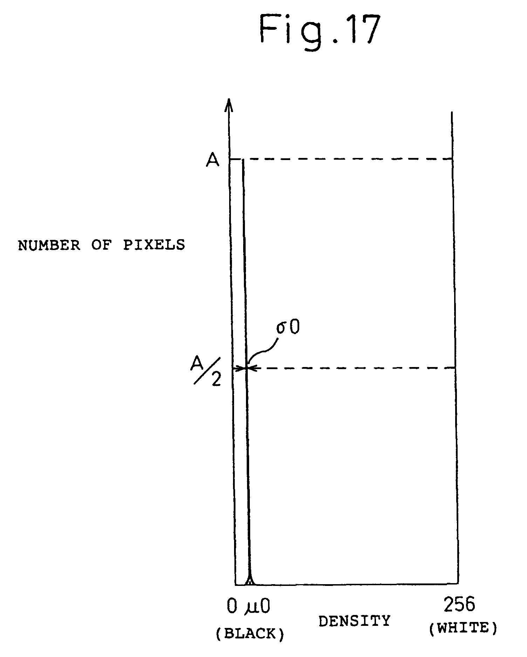

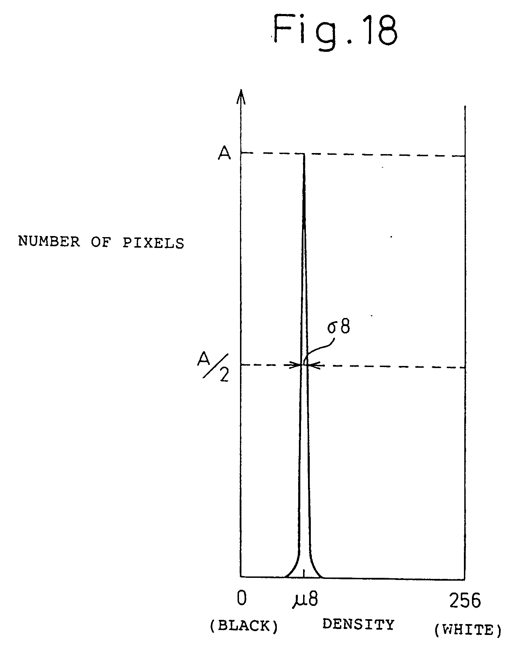

Here, the optical axis described in the "where" clause in equation 2 is defined as the aligning treatment direction, i.e., the average long axis direction of the AFLC molecules, and the y axis is defined as the direction of the absorption axis of the polarizer used in the AFLC cell. In the equation (2), the angle that the optical axis makes with the y axis is denoted by $\phi$. When $\phi = 0°$, the brightness distribution curve is as shown in Figure 17. When $\phi = 8°$, the brightness distribution curve is as shown in Figure 18. When $\phi = 0°$, the brightness distribution is infinitely close to 0, and in actuality, a peak such as shown in Figure 17 is not observed, but by scaling up the abscissa, the peak shown in Figure 17 is obtained.

The mean value of the brightness distribution along the abscissa (density) is designated $\mu 0$ in Figure 17 and $\mu 8$ in Figure 18. Likewise, the standard deviation of the brightness distribution is designated $\sigma 0$ in Figure 17 and $\sigma 8$ in Figure 18. The Jones vectors for the output light from the upper chevron layer and lower chevron layer in the bent layer structure previously shown in Figure 4 are each determined by $\mu$ and $\sigma$. In the case of the AFLC cell with $\phi = 8°$ shown in Figure 18, the Jones vectors can be expressed as follows:

Jones vector for upper chevron layer: J_up ($\mu 8u$, $\sigma 8u$)

Jones vector for lower chevron layer: J_down ($\mu 8d$, $\sigma 8d$)

where $\mu 8u$ and $\sigma 8u$ are, respectively, the mean value and the standard deviation of the density distribution for the upper chevron layer of the AFLC cell of Figure 18, and $\mu 8d$ and $\sigma 8d$ are, respectively, the mean value and the standard deviation of the density distribution for the lower chevron layer.

Since the brightness distribution curves shown in Figure 17 and 18 each include the properties of the upper and lower chevron layers, the value of $\mu 8$ in Figure 18, for example, is obtained from both the value of $\mu 8u$ and the value of $\mu 8d$.

As earlier noted, when considering the Jones matrix of the AFLC cell, account must be taken of both the Jones vector of the upper chevron layer (up) and the Jones vector of the lower chevron layer (down). Accordingly, the Jones matrix of the AFLC cell, taking account of the upper chevron layer (up) and the lower chevron layer (down), can be expressed as

$$M = J\_down(\mu d, \sigma d) \cdot J\_up(\mu u, \sigma u) \cdot Ein \qquad (4)$$

where Ein represents the horizontal linear polarization component of the incident light, which can be expressed using a $2 \times 1$ matrix as

$$\mathtt{Ein} = \begin{bmatrix} 0 \\ 1 \end{bmatrix} \qquad \qquad \ldots (5)$$

Hence, by applying the previously given equation (1) to the AFLC cell, the following equation is obtained.

$$\mathrm{Vout} = M \cdot \mathrm{Vin} \qquad (6)$$

In the case of the Jones matrix W in the previous equation (1), the number of thin plates forming liquid crystal layers was 1, but in the case of the Jones matrix M in the equation (6), the number of thin plates is plural.

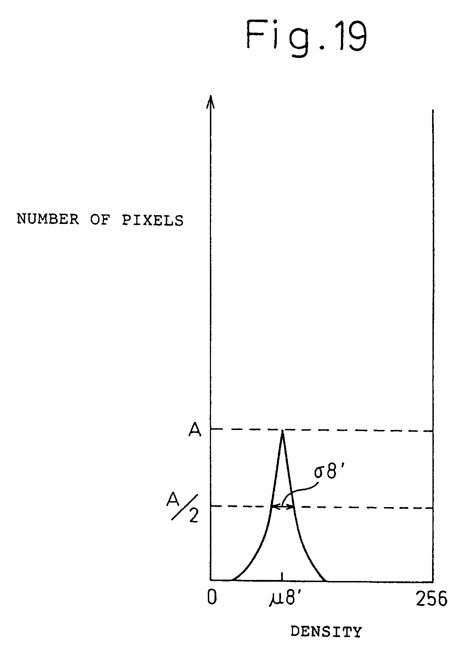

When the AFLC cell is subjected to low temperature experience, the brightness distribution curve shown in Figure 19 is obtained.

As can be seen, differences occur between the brightness distribution curves of Figure 18 and 19 in the mean value, $\mu 8$ versus $\mu 8'$, and standard deviation, $\sigma 8$ versus $\sigma 8'$, of the density distribution. These differences ($\mu 8 - \mu 8'$) and ($\sigma 8 - \sigma 8'$) are caused presumably because the layer structure and the AFLC molecular alignment have changed as the AFLC cell was subjected to a low temperature experience. More specifically, these differences occur presumably because the upper and lower chevron layers have been displaced relative to each other as the result of the subjection to the low temperature experience.

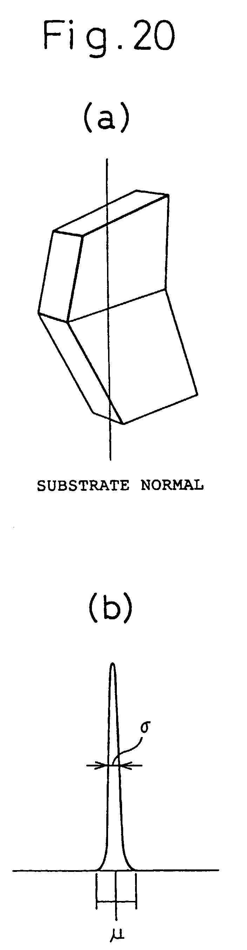

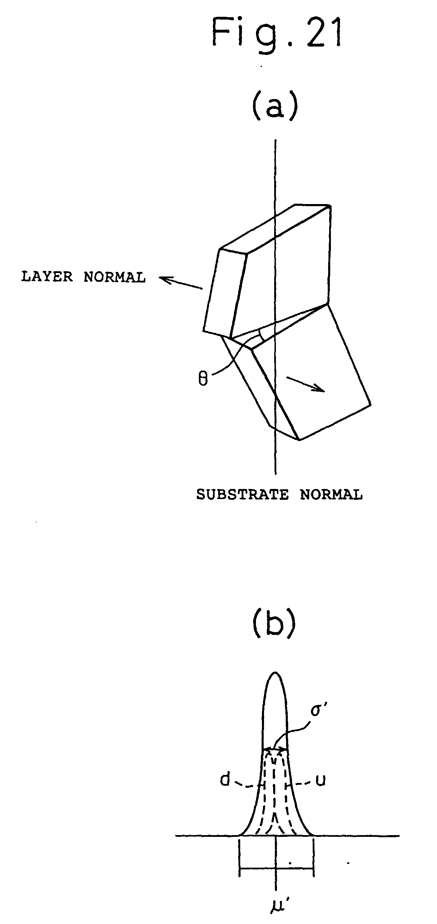

Figure 20 is a diagram showing (a) the liquid crystal layer structure and (b) brightness distribution curve before subjection to the low temperature experience; as shown, there is no displacement between the upper and lower chevron layers. On the other hand, Figure 21 is a diagram showing (a) the liquid crystal layer structure and (b) brightness distribution curve after restoration from the low temperature experience; as shown, the upper and lower chevron layers are displaced relative to each other. As shown in Figure 21, the upper and lower chevron layers are displaced by an angle $\theta$, and the standard deviation is therefore $\sigma'$. The brightness distribution curve (b) is constructed by combining the brightness distribution curve u for the upper chevron layer and the brightness distribution curve d for the lower chevron layer; since they are rotated by the angle $\theta$ relative to each other, the standard deviation $\sigma'$ and the mean value $\mu'$ of the density distribution show larger values. That is, it is considered that differences ($\mu - \mu'$) and ($\sigma - \sigma'$) have been caused as the result of the rotation through the angle $\theta$. The increment of black level becomes more pronounced as the angle $\theta$ increases. Therefore, the degree of the increment of black level can be determined by quantitatively obtaining the angle $\theta$.

The following describes the method of finding the rotation angle $\theta$ when the upper and lower chevron layers are displaced.

First, the initial state brightness distribution is obtained, for example, for the liquid crystal cell with $\phi = 8°$ shown in Figure 18. Next, $\mu 8$ and $\sigma 8$ are obtained from the thus obtained brightness distribution curve, and the Jones vector Vout for the output light is found. Since the Jones vector Vin for the incident light is known, the Jones matrix of the liquid crystal cell with $\phi = 8°$ for the initial state distribution is obtained from

$$M = \mathrm{Vout}/\mathrm{Vin} \qquad (7)$$

In this case, M can be expressed by the equation (4). The equation (4) contains the element $\phi$, which is, in this case, $\phi = 8°$.

Next, the low temperature experienced brightness distribution curve is obtained for the liquid crystal cell with $\phi = 8°$ shown in Figure 18. V'out for the output light is obtained based on the thus obtained low temperature experienced brightness distribution curve. Since the Jones vector V'in for the incident light is known, the Jones matrix M' of the liquid crystal cell with $\phi = 8°$ for the low temperature experienced distribution curve is obtained from

$$M' = \mathrm{V'out}/\mathrm{V'in} \qquad (8)$$

In this case, M' can be expressed as

$$M' = J\_down(\mu d', \sigma d') \cdot J\_up(\mu u', \sigma u') \cdot \mathrm{Ein} \qquad (9)$$

Since the equation (9) contains the element $\phi$, the value of $\phi$ (angle) is obtained from the equation (9). Assuming that the result is $\phi = \alpha$, then the angle of displacement, $\theta$, between the upper and lower chevron layers is

$$\theta = \alpha - 8°$$

The value of θ can thus be found.

The above description has dealt with the case of φ = 8°, but if the value of φ is not known, the angle θ can be found by obtaining the difference between the value of φ for the initial state distribution and the value of φ for the low temperature experienced distribution.

For the liquid crystal cell doped with a chiral dopant, the effectiveness of the chiral dopant doping can be verified quantitatively by finding the angle of displacement, θ, between the upper and lower chevron layers after the low temperature experience. The appropriate level of the chiral dopant doping can also be determined quantitatively.

In the first to sixth embodiments, when θ was obtained from the initial state distribution, i.e., the brightness distribution curve before subjection to the low temperature experience, and the low temperature experienced distribution, i.e., the brightness distribution curve after restoration from the low temperature experience, the value of θ was within ±5° in any of the embodiments. It has been found that no appreciable influence is caused to the display characteristics if the rotational displacement between the upper and lower chevron layers is held within ±5°. It has also been found that the effectiveness can be further enhanced if the angle can be held within ±2.5°.

**Claims**

1. An antiferroelectric liquid crystal panel constructed by sandwiching an antiferroelectric liquid crystal between a pair of substrates, characterized in that a chiral dopant for forming a helical axis substantially parallel to a substrate normal is added to said antiferroelectric liquid crystal.

2. An antiferroelectric liquid crystal panel as claimed in claim 1, characterized in that a chiral dopant for inducing a right-handed twist around the helical axis or a chiral dopant for inducing a left-handed twist around the helical axis is added to said antiferroelectric liquid crystal.

3. An antiferroelectric liquid crystal panel as claimed in claim 1, characterized in that both a chiral dopant for inducing a right-handed twist around the helical axis and a chiral dopant for inducing a left-handed twist around the helical axis are added to said antiferroelectric liquid crystal.

4. An antiferroelectric liquid crystal panel as claimed in any one of claims 1 to 3, characterized in that the amount of said added chiral dopant or dopants is 10% or less.

5. A method of finding through calculation an angle of displacement between an upper chevron and a lower chevron in an antiferroelectric liquid crystal cell used as an optical system, said method comprising: obtaining a Jones vector for output light; obtaining the value of a Jones matrix for said liquid crystal cell from the Jones vector of said output light and a known Jones vector of incident light; and calculating said angle of displacement based on said value.

6. A method of finding the angle of displacement through calculation as claimed in claim 5, characterized in that the Jones vector of said output light is obtained from a mean value, μ, and standard deviation, σ, of a density distribution on a brightness distribution curve for said output light.

# Fig.1

# Fig.2

# Fig.3

## (a)

## (b)

# Fig. 4

# Fig.5

(a) ISOTROPIC PHASE     (b) SmA PHASE     (c) SmCA* PHASE

EP 1 008 897 A1

# Fig.6

# Fig.7

(a) INITIAL STATE DISTRIBUTION WHEN 2% CM WAS ADDED

(b) LOW TEMPERATURE EXPERIENCED DISTRIBUTION WHEN 2% CM WAS ADDED

EP 1 008 897 A1

# Fig.8

NUMBER OF
PIXELS

(a) INITIAL STATE DISTRIBUTION
WHEN 4% CM WAS ADDED

NUMBER OF
PIXELS

(b) LOW TEMPERATURE EXPERIENCED
DISTRIBUTION WHEN 4% CM WAS ADDED

EP 1 008 897 A1

# Fig.9

(a) INITIAL STATE DISTRIBUTION WHEN 2% CN WAS ADDED

(b) LOW TEMPERATURE EXPERIENCED DISTRIBUTION WHEN 2% CN WAS ADDED

EP 1 008 897 A1

# Fig.10

NUMBER OF
PIXELS

26000 ---
22000 ---
18000 ---
14000 ---
10000 ---
6000 ---
2000 ---
0

0          256
DENSITY

(a) INITIAL STATE DISTRIBUTION
WHEN 4% CN WAS ADDED

NUMBER OF
PIXELS

26000 ---
22000 ---
18000 ---
14000 ---
10000 ---
6000 ---
2000 ---
0

0          256
DENSITY

(b) LOW TEMPERATURE EXPERIENCED
DISTRIBUTION WHEN 4% CN WAS ADDED

EP 1 008 897 A1

# Fig.11

(a) INITIAL STATE DISTRIBUTION WHEN 1% CN AND 1% CM WERE ADDED

(b) LOW TEMPERATURE EXPERIENCED DISTRIBUTION WHEN 1% CN AND 1% CM WERE ADDED

EP 1 008 897 A1

# Fig.12

(a) INITIAL STATE DISTRIBUTION WHEN CN AND CM (2% EACH) WERE ADDED

(b) LOW TEMPERATURE EXPERIENCED DISTRIBUTION WHEN CN AND CM (2% EACH) WERE ADDED

EP 1 008 897 A1

# Fig.13

NUMBER OF
PIXELS

(a) INITIAL STATE DISTRIBUTION
OF 59-1H

NUMBER OF
PIXELS

(b) LOW TEMPERATURE EXPERIENCED
DISTRIBUTION OF 59-1H

EP 1 008 897 A1

# Fig.14

| | CHIRAL DOPANT ADDED | CONCENTRATION | STANDARD DEVIATION OF INITIAL STATE DISTRIBUTION (1) | STANDARD DEVIATION OF LOW TEMPERATURE EXPERIENCED DISTRIBUTION (2) | DIFFERENCE BETWEEN (1) AND (2) |
|---|---|---|---|---|---|
| EMBODIMENT 1 | RIGHT-HANDED | 2% | 5.5 | 11.3 | 5.8 |
| EMBODIMENT 2 | RIGHT-HANDED | 4% | 7.0 | 13.7 | 6.7 |
| EMBODIMENT 3 | LEFT-HANDED | 2% | 7.8 | 14.6 | 6.8 |
| EMBODIMENT 4 | LEFT-HANDED | 4% | 7.3 | 13.7 | 6.4 |
| EMBODIMENT 5 | RIGHT-HANDED + LEFT-HANDED | 1%+1% | 7.8 | 16.5 | 8.7 |
| EMBODIMENT 6 | RIGHT-HANDED + LEFT-HANDED | 2%+2% | 9.5 | 13.6 | 4.1 |
| COMPARATIVE EXAMPLE | NONE | – – – – – – – | 8.8 | 21.4 | 12.6 |

EP 1 008 897 A1

# Fig.15

LIGHT TRANSMITTANCE

0.03

(1) M×59-1H
(2) M×59-1H+CM 2%
(3) M×59-1H+CN4%
(4) M×59-1H+CM4%

0.02

(5) M×59-1H+CN2%+CM2%

0    10    20    30    40    50

(MINUTE)

# Fig.16

(δV)

0  A

-0.5  B

-1  C

0    1    2    3    4

TOTAL CONCENTRATION OF CN + CM (%)

# Fig.17

NUMBER OF PIXELS

A

$\sigma 0$

$\dfrac{A}{2}$

0 $\mu 0$     DENSITY     256
(BLACK)           (WHITE)

# Fig.18

# Fig.19

# Fig.20

## (a)

SUBSTRATE NORMAL

## (b)

$\sigma$

$\mu$

# Fig.21

## (a)

LAYER NORMAL

θ

SUBSTRATE NORMAL

## (b)

$\sigma'$

d

u

$\mu'$

# INTERNATIONAL SEARCH REPORT

| International application No. |
| --- |
| PCT/JP99/03531 |

**A. CLASSIFICATION OF SUBJECT MATTER**
Int.Cl$^6$ G02F1/137, 510

According to International Patent Classification (IPC) or to both national classification and IPC

**B. FIELDS SEARCHED**

Minimum documentation searched (classification system followed by classification symbols)
Int.Cl$^6$ G02F1/137, 510

Documentation searched other than minimum documentation to the extent that such documents are included in the fields searched
Jitsuyo Shinan Koho        1926-1999
Kokai Jitsuyo Shinan Koho  1971-1995

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 7-20502, A (Sony Corp.), 24 January, 1995 (24. 01. 95), Page 2, right column, lines 40 to 49 ; page 6, left column, line 40 to right column, line 10 (Family: none) | 1-4 |
| Y | JP, 7-140493, A (Showa Shell Sekiyu K.K.), 2 June, 1995 (02. 06. 95), Page 3, left column, lines 6 to 17, 29 to 35 | 1-4 |
| A | Page 3, left column, lines 18 to 21, right column, line 26 to page 4, left column, line 10 ; Fig. 6 (Family: none) | 5, 6 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 15 July, 1999 (15. 07. 99) | 3 August, 1999 (03. 08. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)